(19) Europäisches Patentamt
European Patent Office
Office européen des brevets

(11) EP 4 206 273 A1

(12) # EUROPEAN PATENT APPLICATION
published in accordance with Art. 153(4) EPC

(43) Date of publication:
**05.07.2023 Bulletin 2023/27**

(21) Application number: **21860968.3**

(22) Date of filing: **01.07.2021**

(51) International Patent Classification (IPC):
***C08K 5/33*** *(2006.01)* ***C08L 27/16*** *(2006.01)*
***H01M 4/131*** *(2010.01)* ***H01M 4/1391*** *(2010.01)*
***H01M 4/505*** *(2010.01)* ***H01M 4/525*** *(2010.01)*
***H01M 4/62*** *(2006.01)* ***C08K 3/22*** *(2006.01)*

(52) Cooperative Patent Classification (CPC):
**C08K 3/22; C08K 5/33; C08L 27/16; H01M 4/131; H01M 4/1391; H01M 4/505; H01M 4/525; H01M 4/62;** Y02E 60/10

(86) International application number:
**PCT/JP2021/024890**

(87) International publication number:
**WO 2022/044538 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2020 JP 2020146163**

(71) Applicant: **Kureha Corporation**
**Chuo-ku**
**Tokyo 103-8552 (JP)**

(72) Inventors:
- **ASHIDA, Kana**
  **Tokyo 103-8552 (JP)**
- **FUJITA, Maki**
  **Tokyo 103-8552 (JP)**
- **KATONO, Masataka**
  **Tokyo 103-8552 (JP)**

(74) Representative: **Zimmermann & Partner Patentanwälte mbB**
**P.O. Box 330 920**
**80069 München (DE)**

(54) **BINDER, ELECTRODE MIXTURE, ELECTRODE, AND NONAQUEOUS ELECTROLYTE SECONDARY BATTERY**

(57) A binder according to an embodiment of the present invention contains: a vinylidene fluoride polymer containing 50 mol% or greater of vinylidene fluoride units; and an oxime.

EP 4 206 273 A1

## Description

### [TECHNICAL FIELD]

The present invention relates to a binder. Specifically, the present invention relates to a binder; and an electrode mixture, an electrode, and a non-aqueous electrolyte secondary battery that use the binder.

### [BACKGROUND ART]

Vinylidene fluoride polymers mainly containing repeating units derived from vinylidene fluoride are widely used as binder resins for batteries, such as lithium-ion secondary batteries. The binder resin is used to adhere an active material to a current collector.

Batteries using a ternary positive electrode active material with high nickel ratio are investigated to increase the capacity of batteries. On the other hand, the ternary positive electrode active material contains a large amount of base, and thus this is likely to accelerate deterioration of a binder composition containing a vinylidene fluoride polymer. In addition, the deterioration increases the viscosity of the electrode mixture in the form of slurry (hereinafter also referred to as the electrode mixture slurry) and finally causes gelation of the electrode mixture slurry. The gelled electrode mixture slurry is difficult to apply to the current collector. Thus, the electrode mixture is required to have higher gelation resistance in batteries using a ternary positive electrode active material.

For example, Patent Document 1 describes a binder composition containing a copolymer having: a first structural unit derived from vinylidene fluoride; and a structural unit having an isocyanate group or a structure that produces an isocyanate group when heated. The document describes that the binder composition does not easily gel even when stored for a long period of time.

In addition, Patent Document 2 describes a conductive paste for a lithium-ion battery positive electrode, the conductive paste containing a dispersion resin, poly(vinylidene fluoride), a conductive carbon, a solvent, and a polymerization inhibitor. The document describes that the paste is highly viscous and is prevented from gelling.

### [CITATION LIST]

### [PATENT DOCUMENT]

Patent Document 1: JP 2019-160675 A
Patent Document 2: JP 2017-228412 A

### [SUMMARY OF INVENTION]

### [TECHNICAL PROBLEM]

However, even with the binder composition and conductive paste described in Patent Documents 1 and 2, the gelation resistance of the electrode mixture is not sufficient, leading to a requirement to develop a binder that prevents gelation of an electrode mixture.

The present invention has been completed in view of the problems of the above technologies in the related art, and an object of the present invention is to provide a binder that further prevents gelation of an electrode mixture than binders in the related art.

### [SOLUTION TO PROBLEM]

As a result of diligent research to solve the problems described above, the present inventors completed the present invention based on a finding that using a binder containing a vinylidene fluoride polymer and an oxime in an electrode mixture can surprisingly prevent gelation of the electrode mixture.

That is, a binder according to an aspect of the present invention contains: a vinylidene fluoride polymer containing 50 mol% or greater of vinylidene fluoride units; and an oxime.

### [ADVANTAGEOUS EFFECTS OF INVENTION]

An aspect of the present invention can provide the binder that prevents gelation of an electrode mixture.

**[DESCRIPTION OF EMBODIMENTS]**

Binder

A binder of the present embodiment contains a vinylidene fluoride polymer and an oxime. The binder according to the present embodiment is used as a binding agent to bind an electrode active material onto a current collector.
The binder of the present embodiment contains an oxime, and thus can prevent gelation of the electrode mixture. That is, the binder of the present embodiment has high gelation resistance. For example, the gelation can be determined to progress when the viscosity of the electrode mixture is higher than that immediately after preparation of the electrode mixture.

Vinylidene fluoride polymer

In the present specification, the "vinylidene fluoride polymer" includes both a homopolymer of vinylidene fluoride, and a copolymer of vinylidene fluoride and a monomer copolymerizable with vinylidene fluoride. The monomer copolymerizable with vinylidene fluoride can be appropriately selected from, for example, known monomers. When vinylidene fluoride is copolymerized, the copolymer contains vinylidene fluoride as a main component. Specifically, the copolymer contains 50 mol% or greater of vinylidene fluoride units, preferably contains 80 mol% or greater of vinylidene fluoride units, and more preferably contains 90 mol% or greater of vinylidene fluoride units.
When the vinylidene fluoride polymer is a copolymer, the polymer is preferably a vinylidene fluoride polymer containing vinylidene fluoride as a main component and a structural unit represented by Formula (3) below.

[Chem. 1]

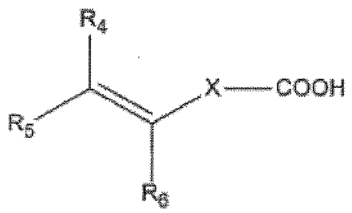

· · · (3)

In Formula (3), $R^4$ is a hydrogen atom, an alkyl group having from 1 to 5 carbons, or a carboxyl group substituted with an alkyl group having from 1 to 5 carbons, and $R^5$ and $R^6$ are each independently a hydrogen atom or an alkyl group having from 1 to 5 carbons. From the viewpoint of polymerization reaction, in particular, $R^4$ and $R^5$ are desirably substituents with small steric hindrance, preferably hydrogen or an alkyl group having from 1 to 3 carbons, and preferably hydrogen or a methyl group.
In Formula (3), X is a single bond or an atomic group having a molecular weight of 500 or less and including a main chain having from 1 to 20 atoms. The molecular weight of the atomic group is preferably 200 or less. In addition, the lower limit of the molecular weight of the atomic group is not particularly limited but is typically 15. The molecular weight of the atomic group is in the range described above, and this can suitably prevent gelation of the electrode mixture slurry. Here, the "number of atoms in the main chain" means the number of atoms of a backbone moiety in a chain, the backbone moiety connecting a carboxyl group described on the right of X in Formula (3) and a group ($R^4R^5C=CR^6$-) described on the left of X via a minimum number of atoms. In addition, X may be branched by containing a functional group as a side chain. X may contain one or a plurality of side chains. When X is a single bond, the compound of Formula (3) has a structure in which the carboxyl group is directly bonded to a carbon atom bonded to $R^6$.
Examples of the compound having the structural unit represented by Formula (3) include acrylic acid (AA), methacrylic acid, 2-carboxyethyl acrylate (CEA), 2-carboxyethyl methacrylate, monomethyl maleate, acryloyloxy ethyl succinic acid (AES), acryloyloxy propyl succinic acid (APS), methacryloyloxy ethyl succinic acid, and methacryloyloxy propyl succinic acid.
The vinylidene fluoride polymer may have, as a structural unit, a component of another compound besides vinylidene fluoride and the structural unit represented by Formula (3). Examples of such a compound include perfluoroalkyl vinyl ethers, such as vinyl fluoride, trifluoroethylene, tetrafluoroethylene, chlorotrifluoroethylene, hexafluoropropylene (HFP), and perfluoromethyl vinyl ether; and (meth)acrylate-based monomers having no COOH group at the terminal, such as glycidyl (meth)acrylate and methyl (meth)acrylate.
When the vinylidene fluoride polymer is a copolymer, it has an amount of modification (the structural unit

represented by Formula (3) in the vinylidene fluoride polymer) of preferably 0.01 to 10 mol%, more preferably 0.1 to 5 mol%, and even more preferably 0.2 to 1 mol%. In addition, the vinylidene fluoride polymer has preferably from 90 to 99.99 mol%, more preferably from 95 to 99.90 mol%, even more preferably from 99.00 to 99.80 mol%, and particularly preferably from 99.50 to 99.80 mol% of the structural unit derived from vinylidene fluoride in the vinylidene fluoride polymer. The structural unit represented by Formula (3) is contained in the above range, and this reduces the change in viscosity of the electrode mixture after storage relative to that of the electrode mixture immediately after preparation and can provide an electrode mixture having a stable viscosity.

The amount of the vinylidene fluoride units and amount of the structural units represented by Formula (3) of the vinylidene fluoride polymer can be determined by $^1$H NMR spectrum or $^{19}$F NMR spectrum, or neutralization titration of the copolymer.

Example of vinylidene fluoride polymer

For the vinylidene fluoride polymer, a commercially available product can be used. Examples include KF #7300, KF #9100, KF #9700, KF #7500, and KF#9400 available from Kureha Corporation.

Inherent viscosity ($\eta$i) of vinylidene fluoride polymer

The inherent viscosity of the vinylidene fluoride polymer used in the present embodiment is not particularly limited but is preferably from 0.5 to 5.0 dL/g, more preferably 1.0 dL/g or higher and 4.5 dL/g or lower, and even more preferably 1.5 dL/g or higher and 4.0 dL/g or lower. The inherent viscosity in the above range is preferred in that an electrode can be easily produced without causing unevenness in thickness of the electrode when the electrode mixture slurry is applied.

The inherent viscosity ($\eta$i) is calculated, for example, as follows. A polymer solution is prepared by dissolving 80 mg of the vinylidene fluoride polymer in 20 mL of N,N-dimethylformamide. The viscosity $\eta$ of the prepared polymer solution is measured using an Ubbelohde viscometer in a constant temperature bath at 30°C. The inherent viscosity ($\eta_i$) is then calculated from the following equation:

$$\eta_i = (1/C) \cdot \ln(\eta/\eta_0)$$

where $\eta_0$ is the viscosity of the solvent N,N-dimethylformamide, and C is the concentration of the vinylidene fluoride polymer in the prepared polymer solution (0.4 g/dL).

Polymerization method of vinylidene fluoride polymer

The polymerization method of the vinylidene fluoride polymer is not particularly limited, and a polymerization method known in the art can be used. Examples of the polymerization method include suspension polymerization, emulsion polymerization, and solution polymerization. Among them, from the viewpoint, such as ease in post-treatment, the polymerization method is preferably suspension polymerization or emulsion polymerization in an aqueous system and particularly preferably suspension polymerization in an aqueous system.

Oxime

The oxime contained in the binder of the present embodiment is a compound in which the oxygen atom of the carbonyl group of an aldehyde or ketone is substituted by a hydroxyimino group (=NOH). That is, an aldehyde-derived oxime (RCH=NOH) and a ketone-derived oxime (R'RC=NOH) are present.

Examples of the oxime include compounds represented by Formula (1).

[Chem. 2]

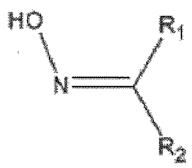

· · · (1)

In Formula (1), $R_1$ and $R_2$ are each independently selected from a hydrogen atom, aldehyde groups, alkyl groups having from 1 to 10 carbons, alkenyl groups having from 2 to 10 carbons, alkynyl groups having from 2 to 10 carbons, cycloalkyl groups having from 3 to 10 carbons, cycloalkenyl groups having from 3 to 10 carbons, aryl groups having from 6 to 18 carbons, aralkyl groups having from 7 to 14 carbons, or heterocyclic groups having from 3 to 13 carbons, and one, some, or all hydrogen atom(s) of these groups may be substituted by a substituent(s) selected from alkyl groups having from 1 to 10 carbons, aryl groups, a hydroxyl group, and an amino group, and $R_1$ and $R_2$ may be bonded to each other and form a ring together with a carbon atom to which $R_1$ and $R_2$ are bonded.

In Formula (1), the alkyl group has from 1 to 10 carbons, preferably from 1 to 5 carbons, and more preferably 1 or 2 carbons. The alkenyl group has from 2 to 10 carbons, preferably from 2 to 6 carbons, and more preferably from 2 to 4 carbons. The alkynyl group has from 2 to 10 carbons, preferably from 2 to 6 carbons, and more preferably from 2 to 4 carbons. The cycloalkyl group has from 3 to 10 carbons, preferably from 3 to 7 carbons, and more preferably from 5 to 7 carbons. The aryl group has from 6 to 18 carbons, preferably from 6 to 10 carbons, and more preferably from 6 to 8 carbons. The aralkyl group has from 7 to 14 carbons, preferably from 7 to 11 carbons, and more preferably from 7 to 9 carbons. The heterocyclic group has from 3 to 13 carbons, preferably from 3 to 10 carbons, and more preferably from 3 to 8 carbons.

In Formula (1), when $R_1$ and $R_2$ are bonded to each other and form a ring together with a carbon atom to which $R_1$ and $R_2$ are bonded, the ring may be an aromatic ring or a non-aromatic ring. In addition, the compound represented by Formula (1) may be a conjugated compound. The ring may be a 3- to 12-membered ring and is preferably a 3- to 8-membered ring. The compound when such a ring is formed is preferably a compound represented by $HO\text{-}N\text{=}R_3$, where $R_3$ is a cycloalkyl group having from 3 to 8 carbons. A hydrogen atom of the cycloalkyl group may be substituted by an alkyl group having from 1 to 10 carbons.

Examples of the compound represented by Formula (1) include acetone oxime (acetoxime), 2-butanone oxime (methyl ethyl ketone oxime), methyl isopropyl ketone oxime, methyl tertiary-butyl ketone oxime, di-tertiary-butyl ketone oxime, 2-pentanone oxime, 3-pentanone oxime, 1-cyclohexyl-1-propanone oxime, acetaldoxime (acetaldehyde oxime), benzaldoxime (benzaldehyde oxime), acetophenone oxime, benzophenone oxime, 4-hydroxyacetophenone oxime, cyclopropanone oxime, cyclobutanone oxime, cyclopentanone oxime, cyclohexanone oxime, cycloheptanone oxime, cyclooctanone oxime, cyclononanone oxime, cyclodecanone oxime, cyclododecanone oxime, benzoquinone dioxime, benzoquinone monoxime, 2,3-butanedione monoxime, acetamide oxime, 3-hydroxy-3-methyl-2-butanone oxime, $\alpha$-benzoin oxime, 1,3-dihydroxyacetone oxime, and 2-isonitrosopropiophenone.

In the binder of the present embodiment, $R_1$ and $R_2$ in the compound represented by Formula (1) are preferably each independently selected from a hydrogen atom, aryl groups having from 6 to 18 carbons, aldehyde groups, or alkyl groups having from 1 to 10 carbons from the viewpoint, such as high gelation resistance. One, some, or all hydrogen atom(s) of these groups may be substituted by a substituent(s) selected from alkyl groups having from 1 to 10 carbons, aryl groups, a hydroxyl group, and an amino group. In addition, when $R_1$ and $R_2$ are alkyl groups, $R_1$ and $R_2$ may be bonded to each other and form a ring together with a carbon atom to which $R_1$ and $R_2$ are bonded. Examples of the compounds represented by Formula (1) in a preferred aspect include acetoxime, 2-butanone oxime, cyclohexanone oxime, acetaldehyde oxime, benzaldehyde oxime, and 2,3-butanedione monoxime.

In the binder of the present embodiment, $R_1$ and $R_2$ in the compound represented by Formula (1) are more preferably each independently selected from alkyl groups having from 1 to 10 carbons from the viewpoint, such as high gelation resistance. One, some, or all hydrogen atom(s) of these groups may be substituted by a substituent(s) selected from alkyl groups having from 1 to 10 carbons, aryl groups, a hydroxyl group, and an amino group, and when $R_1$ and $R_2$ are alkyl groups, $R_1$ and $R_2$ may be bonded to each other and form a ring together with a carbon atom to which $R_1$ and $R_2$ are bonded. Examples of the compounds represented by Formula (1) in a more preferred aspect include acetoxime, 2-butanone oxime, and cyclohexanone oxime.

In addition, examples of the oxime include compounds represented by Formula (2).

[Chem. 3]

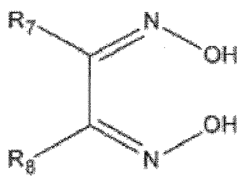

・・・(2)

In Formula (2), $R_7$ and $R_8$ are each independently selected from a hydrogen atom, aldehyde groups, alkyl

groups having from 1 to 10 carbons, alkenyl groups having from 2 to 10 carbons, alkynyl groups having from 2 to 10 carbons, cycloalkyl groups having from 3 to 10 carbons, cycloalkenyl groups having from 3 to 10 carbons, aryl groups having from 6 to 18 carbons, aralkyl groups having from 7 to 14 carbons, or heterocyclic groups having from 3 to 13 carbons, one, some, or all hydrogen atom(s) of these groups may be substituted by a substituent(s) selected from alkyl groups having from 1 to 10 carbons, aryl groups, a hydroxyl group, and an amino group, and $R_7$ and $R_8$ may be bonded to each other and form a ring together with a carbon atom to which $R_7$ is bonded and a carbon atom to which $R_8$ is bonded.

Examples of the compounds represented by Formula (2) include dimethylglyoxime, methylethylglyoxime, diethylglyoxime, and diphenylglyoxime.

An aspect of preferred substituents ($R_7$ and $R_8$) of Formula (2) is similar to the aspect of the preferred substituents ($R_1$ and $R_2$) of Formula (1). Examples of the compounds represented by Formula (2) in a preferred aspect include dimethylglyoxime.

In addition, examples of the oxime include a polymer containing a hydroxyimino group (which may be hereinafter referred to as an "oxime polymer") or an oligomer containing a hydroxyimino group (which may be hereinafter referred to as an "oxime oligomer"). An oxime polymer and oxime oligomer have low volatility and thus allow longer storage of the binder than binders using a low molecular weight oxime.

The oxime polymer or oxime oligomer can be synthesized by polymerizing a monomer or oligomer containing a hydroxyimino group or reacting hydroxyamine with a polymer or oligomer having a ketone group in the backbone. Examples of the polymer having a ketone group in the backbone include poly(methyl vinyl ketone), polyketone (PK), poly(ether ketone) (PEK), poly(ether ether ketone) (PEEK), poly(ether ketone ketone) (PEKK), poly(ether ether ketone ketone) (PEEKK), and poly(ether ketone ether ketone ketone) (PEKEKK).

Examples of the oxime polymer or oxime oligomer include poly(methyl vinyl oxime).

One of the above oximes may be used alone, or two or more in combination.

In addition, the binder contains preferably from 0.005 to 5 mmol, more preferably from 0.1 to 5 mmol, and even more preferably from 0.25 to 5 mmol of the oxime per gram of the vinylidene fluoride polymer. Furthermore, the binder contains preferably from 0.005 to 5 mmol, more preferably from 0.1 to 5 mmol, and even more preferably from 0.25 to 5 mmol of hydroxyimino groups contained in the oxime per gram of the vinylidene fluoride polymer.

The form of the binder of the present embodiment is not particularly limited and may be powder or liquid. In addition, the binder may contain a solvent. The solvent may be a non-aqueous solvent or may be water. Examples of the non-aqueous solvent include N-methylpyrrolidone, N,N-dimethylformamide, N,N-dimethylacetamide, dimethylsulfoxide, hexamethylphosphoramide, dioxane, tetrahydrofuran, tetramethylurea, triethylphosphate, trimethylphosphate, acetone, ethyl acetate, n-butyl acetate, n-butanol, dipropylene glycol monomethyl ether, propylene glycol monomethyl ether acetate, and cyclohexanone. Two or more of these solvents may be mixed and used.

## Electrode mixture

The electrode mixture of the present embodiment contains the binder and an active material. The electrode mixture may contain a conductive additive, a non-aqueous solvent, a pigment dispersant, a dispersion stabilizer, or the like.

An electrode mixture can be made into an electrode mixture for a positive electrode or an electrode mixture for a negative electrode by changing the type of active material or the like depending on the type of current collector to be coated. The vinylidene fluoride polymer typically has excellent oxidation resistance, and thus the electrode mixture of the present embodiment is preferably used as an electrode mixture for a positive electrode.

## Active material

A lithium metal oxide is typically used as the positive electrode active material. The positive electrode active material may contain, for example, an impurity and an additive in addition to the lithium metal oxide. In addition, the types of impurity, additive, and the like contained in the positive electrode active material are not particularly limited.

Examples of the lithium metal oxide include $LiMnO_2$, $LiMn_2O_4$, $LiCoO_2$, $LiNiO_2$, $LiNi_xCo_{1-x}O_2$ ($0 < x < 1$), $LiNi_xCo_yMn_{1-x-y}O_2$ ($0 < x < 1$, $0 < y < 1$), $LiNi_xCo_yAl_{1-x-y}O_2$ ($0 < x < 1$, $0 < y < 1$), and $LiFePO_4$.

The lithium metal oxide preferably contains Ni in terms of increasing the capacity density to achieve high capacity of the secondary battery. In addition, the lithium metal oxide preferably further contains Co or the like in addition to Ni in terms of suppressing a change in the crystal structure during the charging and discharging process and thus exhibiting stable cycle characteristics.

Examples of a preferred lithium metal oxide include lithium metal oxides (ternary lithium metal oxides) represented by Formula (4) below. A ternary lithium metal oxide has high charging potential and excellent cycle characteristics and thus is particularly preferably used as the electrode active material in the present embodiment.

$LiNi_xCo_yM_zO_2$ ... (4)

where M is Mn or Al, and $0 < x \leq 1$, $0 < y \leq 1$, and $0 < z \leq 1$.

Specific examples of the preferred lithium metal oxide include $Li_{1.00}Ni_{0.5}Co_{0.2}Mn_{0.3}O_2$ (NCM523), $Li_{1.00}Ni_{0.6}Co_{0.2}Mn_{0.2}O_2$ (NCM622), $Li_{1.00}Ni_{0.83}Co_{0.12}Mn_{0.05}O_2$ (NCM811), and $Li_{1.00}Ni_{0.85}Co_{0.15}Al_{0.05}O_2$ (NCA811). After extraction of these preferred lithium metal oxides with water, the pH of the water is 10.5 or higher. The extraction is extraction at normal temperature (25°C) by the extraction method specified in JIS K 5101-16-2.

Specifically, the pH value is obtained by placing an electrode active material in ultrapure water in an amount 50 times the weight of the electrode active material, stirring the mixture with a magnetic stirrer at a rotational speed of 600 rpm for 10 minutes, and measuring the pH of the solution using a pH meter MODEL: F-21 available from Horiba, Ltd.

The electrode mixture slurry containing the positive electrode active material exhibiting the pH of water of at least 10.5 or higher contains a large amount of base in the slurry, and the electrode mixture thus easily deteriorates. This is likely to result in increased viscosity of the electrode mixture slurry. To suppress the increase in the viscosity of the electrode mixture slurry, the base needs to be removed by washing the positive electrode active material with water. However, the electrode mixture of the present embodiment contains an oxime, and this suppresses the increase in the viscosity of the electrode mixture slurry (gelation of the electrode mixture) even using a positive electrode active material containing a large amount of base. Thus, the electrode mixture of the present embodiment contains an oxime, and this eliminates the need to wash the positive electrode active material with water.

Examples of a negative electrode active material that can be used include materials known in the art, such as carbon materials, metal/alloy materials, and metal oxides. Among these, from the viewpoint of further increasing the energy density of the battery, the negative electrode active material is preferably a carbon material, and examples of the carbon material include artificial graphite, natural graphite, non-graphitizable carbon, and graphitizable carbon.

The electrode mixture contains preferably from 0.2 to 15 parts by mass and more preferably from 0.5 to 10 parts by mass of the vinylidene fluoride polymer when the amount of the active material is 100 parts by mass.

In addition, the electrode mixture contains preferably from 0.01 to 10 mmol, more preferably from 0.2 to 10 mmol, and even more preferably from 0.5 to 10 mmol of the oxime per 100 g of the active material. Furthermore, the electrode mixture contains preferably from 0.01 to 10 mmol, more preferably from 0.2 to 10 mmol, and even more preferably from 0.5 to 10 mmol of hydroxyimino groups contained in the oxime per 100 g of the active material.

Conductive additive

A conductive additive may be added to increase the conductivity of an electrode mixture layer when an active material with low electronic conductivity, such as $LiCoO_2$ is used. Examples of the conductive additive that can be used include carbonaceous materials, such as carbon blacks, carbon nanotubes, graphite fine powders, and graphite fibers; and metal fine powders or metal fibers, such as those of nickel or aluminum.

Non-aqueous solvent

Examples of the non-aqueous solvent that can be used include non-aqueous solvents exemplified as the non-aqueous solvents that can be contained in the binder described above and include N-methylpyrrolidone (NMP). In addition, one non-aqueous solvent may be used alone, or two or more may be mixed.

Additional component of electrode mixture

The electrode mixture of the present embodiment may contain an additional component besides the components described above. Examples of the additional component include pigment dispersants, such as polyvinylpyrrolidone.

Preparation of electrode mixture

The electrode mixture according to the present embodiment is obtained, for example, by mixing the binder containing the vinylidene fluoride polymer and the oxime with an active material to form a homogeneous slurry, and the order of mixing is not particularly limited. Furthermore, when a binder containing a solvent is used as the binder, an electrode active material or the like may be added before the solvent is added to the binder. For example, the electrode mixture may be obtained by adding an electrode active material to the binder, then adding a solvent, and stirring and mixing them. In addition, the electrode mixture may be obtained by dispersing an electrode active material in a solvent, adding the binder to the dispersion, and stirring and mixing them. Alternatively, the electrode mixture may be obtained by adding an electrode active material to a binder containing a solvent as the binder, and stirring and mixing them.

In addition, the electrode mixture can also be prepared by mixing the oxime and the active material and then

mixing the vinylidene fluoride polymer.

Electrode

An electrode according to the present embodiment includes an electrode mixture layer formed from the electrode mixture described above on a current collector. The "electrode" in the present specification and the like means an electrode of a battery in which an electrode mixture layer formed from the electrode mixture of the present embodiment is formed on a current collector unless otherwise specified.

Current collector

The current collector is a substrate of the electrode and is a terminal for extracting electricity. Examples of materials for the current collector include iron, stainless steel, steel, copper, aluminum, nickel, and titanium. The form of the current collector is preferably foil or mesh. When the electrode is a positive electrode, the current collector is preferably aluminum foil. The thickness of the current collector is preferably from 5 μm to 100 μm and more preferably from 5 to 20 μm.

Electrode mixture layer

The electrode mixture layer is a layer obtained by applying the aforementioned electrode mixture to the current collector, and drying it. A known method in the technical field can be used as the method for applying the electrode mixture, and examples thereof include methods that use a bar coater, a die coater, or a comma coater. The drying temperature for forming the electrode mixture layer is preferably from 50°C to 170°C and more preferably from 50°C to 150°C. The electrode mixture layer may be formed on both surfaces or only on either surface of the current collector.

The thickness of the electrode mixture layer is typically from 20 to 600 μm per side, and preferably from 20 to 350 μm per side. The electrode mixture layer may also be pressed to increase the density. Furthermore, the basis weight of the electrode mixture layer is typically from 20 to 700 $g/m^2$, and preferably from 30 to 500 $g/m^2$.

As described above, when an electrode mixture for a positive electrode is used to obtain an electrode mixture layer, the electrode is a positive electrode, and when an electrode mixture for a negative electrode is used to obtain an electrode mixture layer, the electrode is a negative electrode. The electrode according to the present embodiment can be used, for example, as a positive electrode of a non-aqueous electrolyte secondary battery such as a lithium-ion secondary battery.

Non-aqueous electrolyte secondary battery

The non-aqueous electrolyte secondary battery of the present embodiment includes the electrode described above. Other members of the non-aqueous electrolyte secondary battery are not particularly limited, and for example, members used in the art can be used.

Examples of the method for producing the non-aqueous electrolyte secondary battery include a method in which a negative electrode layer and a positive electrode layer are overlaid via a separator and placed in a battery container; an electrolyte solution is injected into the battery container; and the battery container is sealed. In this production method, at least a part of the vinylidene fluoride polymer contained in the electrode mixture is melted and adhered to the separator by heat press after the injection of the electrode solution.

Summary

The binder according to the present embodiment contains: a vinylidene fluoride polymer containing 50 mol% or greater of vinylidene fluoride units; and an oxime.

In addition, in the binder according to the present embodiment, the oxime is preferably at least one oxime selected from compounds represented by Formula (1) below, compounds represented by Formula (2), and polymers or oligomers having a hydroxyimino group:

[Chem. 4]

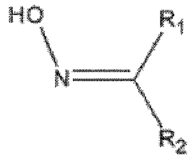

・・・(1)

[Chem. 5]

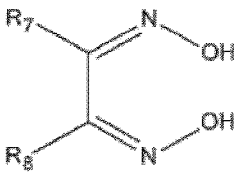

・・・(2)

where in Formula (1) above, $R_1$ and $R_2$ are each independently selected from a hydrogen atom, aldehyde groups, alkyl groups having from 1 to 10 carbons, alkenyl groups having from 2 to 10 carbons, alkynyl groups having from 2 to 10 carbons, cycloalkyl groups having from 3 to 10 carbons, cycloalkenyl groups having from 3 to 10 carbons, aryl groups having from 6 to 18 carbons, aralkyl groups having from 7 to 14 carbons, or heterocyclic groups having from 3 to 13 carbons, and one, some, or all hydrogen atom(s) of these groups may be substituted by a substituent(s) selected from alkyl groups having from 1 to 10 carbons, aryl groups, a hydroxyl group, and an amino group, and $R_1$ and $R_2$ may be bonded to each other and form a ring together with a carbon atom to which $R_1$ and $R_2$ are bonded; and in Formula (2), $R_7$ and $R_8$ are each independently selected from a hydrogen atom, aldehyde groups, alkyl groups having from 1 to 10 carbons, alkenyl groups having from 2 to 10 carbons, alkynyl groups having from 2 to 10 carbons, cycloalkyl groups having from 3 to 10 carbons, cycloalkenyl groups having from 3 to 10 carbons, aryl groups having from 6 to 18 carbons, aralkyl groups having from 7 to 14 carbons, or heterocyclic groups having from 3 to 13 carbons, and one, some, or all hydrogen atom(s) of these groups may be substituted by a substituent(s) selected from alkyl groups having from 1 to 10 carbons, aryl groups, a hydroxyl group, and an amino group, and

$R_7$ and $R_8$ may be bonded to each other and form a ring together with a carbon atom to which $R_7$ is bonded and a carbon atom to which $R_8$ is bonded.

Furthermore, in the binder according to the present embodiment, in Formula (1) above, $R_1$ and $R_2$ are each independently selected from a hydrogen atom, aryl groups having from 6 to 18 carbons, aldehyde groups, or alkyl groups having from 1 to 10 carbons, and one, some, or all hydrogen atom(s) of these groups may be substituted by a substituent(s) selected from alkyl groups having from 1 to 10 carbons, aryl groups, a hydroxyl group, and an amino group, and

when $R_1$ and $R_2$ are alkyl groups, $R_1$ and $R_2$ may be bonded to each other and form a ring together with a carbon atom to which $R_1$ and $R_2$ are bonded; and in Formula (2) above, $R_7$ and $R_8$ are each independently selected from a hydrogen atom, aryl groups having from 6 to 18 carbons, aldehyde groups, or alkyl groups having from 1 to 10 carbons, and one, some, or all hydrogen atom(s) of these groups may be substituted by a substituent(s) selected from alkyl groups having from 1 to 10 carbons, aryl groups, a hydroxyl group, and an amino group, and

when $R_7$ and $R_8$ are alkyl groups, $R_7$ and $R_8$ may be bonded to each other and form a ring together with a carbon atom to which $R_7$ is bonded and a carbon atom to which $R_8$ is bonded.

Moreover, in the binder according to the present embodiment, in Formula (1) above, $R_1$ and $R_2$ are each independently selected from alkyl groups having from 1 to 10 carbons, and

when $R_1$ and $R_2$ are alkyl groups, $R_1$ and $R_2$ may be bonded to each other and form a ring together with a carbon atom to which $R_1$ and $R_2$ are bonded; and in Formula (2) above, $R_7$ and $R_8$ are each independently selected from a hydrogen atom or alkyl groups having from 1 to 10 carbons, and

when $R_7$ and $R_8$ are alkyl groups, $R_7$ and $R_8$ may be bonded to each other and form a ring together with a carbon atom to which $R_7$ is bonded and a carbon atom to which $R_8$ is bonded.

Still more, in the binder according to the present embodiment, the vinylidene fluoride polymer may be a vinylidene fluoride polymer containing a structural unit derived from a compound represented by Formula (3) below:

[Chem. 6]

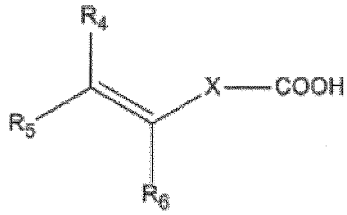

・・・(3)

where in Formula (3), $R_4$ is a hydrogen atom, an alkyl group having from 1 to 5 carbons, or a carboxyl group substituted with an alkyl group having from 1 to 5 carbons, $R_5$ and $R_6$ are each independently a hydrogen atom or an alkyl group having from 1 to 5 carbons, and X is a single bond or an atomic group having a molecular weight of 500 or less and including a main chain having from 1 to 20 atoms.

In addition, in the electrode mixture according to the present embodiment, the active material is a lithium metal oxide represented by Formula (4) below, and after extraction of the lithium metal oxide with water, pH of the water is preferably 10.5 or higher:

$$LiNi_xCo_yM_zO_2 \ldots \quad (4)$$

where in Formula (4), M is Mn or Al, and $0 < x \leq 1$, $0 < y \leq 1$, and $0 < z \leq 1$.

Furthermore, in the electrode mixture according to the present embodiment, a content of the oxime is preferably from 0.01 to 10 mmol per 100 g of the active material.

The electrode according to the present embodiment includes an electrode mixture layer formed from the electrode mixture described above on a current collector.

The non-aqueous electrolyte secondary battery according to the present embodiment includes the electrode described above.

Embodiments of the present invention will be described in further detail hereinafter using examples. The present invention is not limited to the examples below, and it goes without saying that various aspects are possible with regard to the details thereof. Furthermore, the present invention is not limited to the embodiments described above, and various modifications are possible within the scope indicated in the claims. Embodiments obtained by appropriately combining the technical means disclosed by the embodiments are also included in the technical scope of the present invention. In addition, all of the documents described in the present specification are herein incorporated by reference.

**[EXAMPLES]**

Preparation Example 1: preparation of VDF/APS copolymer

In an autoclave with an internal volume of 2 liters were charged 1096 g of ion-exchanged water, 0.2 g of Metolose 90SH-100 (available from Shin-Etsu Chemical Co., Ltd.), 2.2 g of a 50 wt.% diisopropyl peroxydicarbonate-HCFC 225cb solution, 426 g of vinylidene fluoride, and an initial addition amount of 0.2 g of acryloyloxy propyl succinic acid (APS). The temperature was raised to 26°C over 1 hour and then maintained at 26°C, and a 6 wt.% APS aqueous solution was gradually added at a rate of 0.5 g/min. The resulting polymer slurry was dehydrated and dried, and a vinylidene fluoride copolymer (VDF/APS copolymer) containing a polar group was obtained. APS was added in a total amount of 4.0 g including the initially added amount.

Preparation Example 2: preparation of VDF/HFP/APS copolymer

In an autoclave with an internal volume of 2 liters were charged 1048 g of ion-exchanged water, 0.62 g of Metolose SM-100 (available from Shin-Etsu Chemical Co., Ltd.), 3.95 g of a 50 wt.% diisopropyl peroxydicarbonate-HCFC 225cb solution, 374 g of vinylidene fluoride, 40 g of hexafluoropropylene (HFP), and an initial addition amount of 0.37 g of APS, and heated to 29°C. A 2 wt.% APS aqueous solution was continuously supplied to a reactor under conditions of maintaining a constant pressure during polymerization. The resulting polymer slurry was dehydrated and dried, and a vinylidene fluoride copolymer (VDF/HFP/APS copolymer) was obtained. APS was added in a total amount of 3.66 g including the initially added amount.

Preparation Example 3: preparation of VDF/AA copolymer

In an autoclave with an internal volume of 2 liters were charged 900 g of ion-exchanged water, 0.4 g of Metolose 90SH-100 (available from Shin-Etsu Chemical Co., Ltd.), 4 g of a 50 wt.% perbutyl perpivalate-HCFC 225cb solution, 396 g of vinylidene fluoride, and an initial addition amount of 0.2 g of acrylic acid (AA), and heated to 50°C. A 3 wt.% AA aqueous solution was continuously supplied to a reactor under conditions of maintaining a constant pressure during polymerization. The resulting polymer slurry was dehydrated and dried, and a vinylidene fluoride copolymer (VDF/AA) was obtained. AA was added in a total amount of 1.96 g including the initially added amount.

Preparation Example 4: preparation of VDF/MMM copolymer

In an autoclave with an internal volume of 2 liters were charged 1040 g of ion-exchanged water, 0.8 g of Metolose 90SH-100 (available from Shin-Etsu Chemical Co., Ltd.), 2 g of diisopropyl peroxydicarbonate, 396 g of vinylidene fluoride, and 4 g of monomethyl maleate, and were subjected to suspension polymerization at 28°C. The resulting polymer slurry was dehydrated and dried, and a vinylidene fluoride copolymer (VDF/MMM) was obtained.

Preparation Example 5: synthesis of poly(methyl vinyl oxime)

In a 200-mL three-necked flask purged with nitrogen were charged 10 g (143 mmol) of methyl vinyl ketone, 1 g (6 mmol) of 2,2'-azobis(isobutyronitrile), and 40 mL of toluene that was bubbled with nitrogen for 20 minutes, and stirred at 70°C for 3.5 hours. The reaction solution after stirring was added to a large amount of hexane, and a crude product containing precipitated poly(methyl vinyl ketone) was collected. In a 200-mL three-necked flask, the total amount of the resulting crude product, 12.8 g (78 mmol) of hydroxylamine sulfate, and 60 mL of pyridine were then charged, and stirred at 80°C for 4 hours. The reaction solution after stirring was added to a large amount of pure water, a precipitate was collected by filtration, and 6.8 g of poly(methyl vinyl oxime), the target oxime polymer product, was obtained in a yield of 56%.

Example 1: preparation of electrode mixture

NCA811 was used as the electrode active material. Carbon black (SP: Super P (trade name) available from Timcal Japan K.K., average particle size: 40 nm, specific surface area: 60 $m^2/g$) as the conductive additive was added to NCA811, and the powders were mixed.

The VDF/APS copolymer and acetoxime obtained in Preparation Example 1 were dissolved in N-methyl-2-pyrrolidone (hereinafter referred to as "NMP"), and a binder solution was prepared. The binder solution contained 6 wt.% of the vinylidene fluoride polymer and 0.34 mmol of acetoxime per gram of the vinylidene fluoride polymer. In addition, at this time, the amount of hydroxyimino groups contained in acetoxime per gram of the vinylidene fluoride polymer was 0.34 mmol.

The binder solution was added in two portions to the mixture of NCA811 and carbon black and kneaded. Specifically, the binder solution was added to give a solid content concentration of 81.5 wt.%, and primary kneading was performed at 2000 rpm for 2.5 minutes. The remaining binder solution was then added to give a solid content concentration of 75 wt.%, secondary kneading was performed at 2000 rpm for 3 minutes, and an electrode mixture was obtained. The weight ratio of the electrode active material, carbon black, and the VDF/APS copolymer (electrode active material:carbon black:VDF/APS copolymer) in the resulting electrode mixture was 100:2:2.

Example 2: preparation of electrode mixture

An electrode mixture was prepared in the same manner as in Example 1 except that the amount of acetoxime in the binder solution was changed to 0.17 mmol per gram of the vinylidene fluoride polymer. At this time, the amount of hydroxyimino groups contained in acetoxime per gram of the vinylidene fluoride polymer was 0.17 mmol.

Example 3: preparation of electrode mixture

An electrode mixture was prepared in the same manner as in Example 1 except that the amount of acetoxime in the binder solution was changed to 0.84 mmol per gram of the vinylidene fluoride polymer. At this time, the amount of hydroxyimino groups contained in acetoxime per gram of the vinylidene fluoride polymer was 0.84 mmol.

Example 4: preparation of electrode mixture

An electrode mixture was prepared in the same manner as in Example 1 except that the amount of acetoxime in the binder solution was changed to 0.09 mmol per gram of the vinylidene fluoride polymer. At this time, the amount of hydroxyimino groups contained in acetoxime per gram of the vinylidene fluoride polymer was 0.09 mmol.

Example 5: preparation of electrode mixture

An electrode mixture was prepared in the same manner as in Example 1 except that acetoxime was changed to 2-butanone oxime. At this time, the amount of hydroxyimino groups contained in 2-butanone oxime per gram of the vinylidene fluoride polymer was 0.34 mmol.

Example 6: preparation of electrode mixture

An electrode mixture was prepared in the same manner as in Example 1 except that acetoxime was changed to cyclohexanone oxime. At this time, the amount of hydroxyimino groups contained in cyclohexanone oxime per gram of the vinylidene fluoride polymer was 0.34 mmol.

Example 7: preparation of electrode mixture

An electrode mixture was prepared in the same manner as in Example 1 except that acetoxime was changed to acetaldehyde oxime. At this time, the amount of hydroxyimino groups contained in acetaldehyde oxime per gram of the vinylidene fluoride polymer was 0.34 mmol.

Example 8: preparation of electrode mixture

An electrode mixture was prepared in the same manner as in Example 1 except that acetoxime was changed to benzaldehyde oxime. At this time, the amount of hydroxyimino groups contained in benzaldehyde oxime per gram of the vinylidene fluoride polymer was 0.34 mmol.

Example 9: preparation of electrode mixture

An electrode mixture was prepared in the same manner as in Example 1 except that acetoxime was changed to 2,3-butanedione monoxime. At this time, the amount of hydroxyimino groups contained in 2,3-butanedione monoxime per gram of the vinylidene fluoride polymer was 0.34 mmol.

Example 10: preparation of electrode mixture

An electrode mixture was prepared in the same manner as in Example 1 except that acetoxime was changed to dimethylglyoxime. At this time, the amount of hydroxyimino groups contained in dimethylglyoxime per gram of the vinylidene fluoride polymer was 0.67 mol.

Example 11: preparation of electrode mixture

An electrode mixture was prepared in the same manner as in Example 1 except that the VDF/APS copolymer obtained in Preparation Example 1 was changed to a homopolymer, KF #7300 (available from Kureha Corporation).

Example 12: preparation of electrode mixture

An electrode mixture was prepared in the same manner as in Example 3 except that the VDF/APS copolymer obtained in Preparation Example 1 was changed to the VDF/HFP/APS copolymer obtained in Preparation Example 2.

Example 13: preparation of electrode mixture

An electrode mixture was prepared in the same manner as in Example 1 except that the VDF/APS copolymer obtained in Preparation Example 1 was changed to the VDF/MMM copolymer obtained in Preparation Example 4.

Example 14: preparation of electrode mixture

An electrode mixture was prepared in the same manner as in Example 1 except that the VDF/APS copolymer obtained in Preparation Example 1 was changed to the VDF/AA copolymer obtained in Preparation Example 3.

Example 15: preparation of electrode mixture

An electrode mixture was prepared in the same manner as in Example 11 except that acetoxime was changed to poly(methyl vinyl oxime), and poly(methyl vinyl oxime) was contained in the binder solution in such an amount that the amount of hydroxyimino groups contained in poly(methyl vinyl oxime) was 0.34 mmol per gram of the vinylidene fluoride polymer.

Comparative Example 1: preparation of electrode mixture

An electrode mixture was prepared in the same manner as in Example 1 except that acetoxime was not added to the binder solution.

Comparative Example 2: preparation of electrode mixture

An electrode mixture was prepared in the same manner as in Example 11 except that acetoxime was not added to the binder solution.

Comparative Example 3: preparation of electrode mixture

An electrode mixture was prepared in the same manner as in Example 1 except that acetoxime was changed to hydroquinone.

Comparative Example 4: preparation of electrode mixture

An electrode mixture was prepared in the same manner as in Example 1 except that acetoxime was changed to 3,5-dimethylpyrazole.

Comparative Example 5: preparation of electrode mixture

An electrode mixture was prepared in the same manner as in Example 1 except that acetoxime was changed to an isocyanate compound MOI-BP (available from Showa Denko K.K.). MOI-BP is 2-[0-(1'-methylpropylideneamino)carboxyamino]ethyl methacrylate.

Comparative Example 6: preparation of electrode mixture

An electrode mixture was prepared in the same manner as in Example 12 except that acetoxime was not added to the binder solution.

Comparative Example 7: preparation of electrode mixture

An electrode mixture was prepared in the same manner as in Example 13 except that acetoxime was not added to the binder solution.

Comparative Example 8: preparation of electrode mixture

An electrode mixture was prepared in the same manner as in Example 14 except that acetoxime was not added to the binder solution.

Evaluation Example 1: pH measurement of electrode active material

The pH of the electrode active material (NCA811) was determined as the pH of water after the electrode active material was extracted with water at normal temperature (25°C). The electrode active material was extracted into water by the extraction method specified by JIS K 5101-16-2. Specifically, the electrode active material was added in ultrapure

water in an amount of 50 times the weight of the electrode active material, the mixture was stirred with a magnetic stirrer at a rotational speed of 600 rpm for 10 minutes, and the pH of the solution was measured using a pH meter MODEL: F-21 available from Horiba, Ltd. The pH after extraction when the NCA 811 was extracted with water was 11.5.

Evaluation Example 2: inherent viscosity ($\eta_i$) of vinylidene fluoride polymer

A polymer solution was prepared by dissolving 80 mg of the vinylidene fluoride polymer in 20 mL of N,N-dimethylformamide. The viscosity $\eta$ of the prepared polymer solution was measured using an Ubbelohde viscometer in a constant temperature bath at 30°C. The inherent viscosity ($\eta_i$) was then calculated from the following equation:

$$\eta_i = (1/C) \cdot \ln(\eta/\eta_0)$$

where $\eta_0$ is the viscosity of the solvent N,N-dimethylformamide, and C is the concentration of the vinylidene fluoride polymer in the prepared polymer solution (0.4 g/dL).

Evaluation Example 3: measurements of structural unit amounts of vinylidene fluoride and comonomer

The $^1$H NMR spectrum of the polymer powder was determined under the following conditions. An instrument used was an AVANCE AC 400 FT NMR spectrometer (available from Bruker Corp).

Measurement conditions

Frequency: 400 MHz
Measurement solvent: DMSO-d6
Measurement temperature: 25°C

The amount of structural units derived from the vinylidene fluoride and the amount of structural units derived from the comonomer of the polymer were calculated from the $^1$H NMR spectrum. Specifically, the amounts of the structural units were calculated based on integrated intensities of a signal derived mainly from the comonomer and signals at 2.24 ppm and 2.87 ppm derived mainly from vinylidene fluoride.

When a comonomer having a structure derived from acrylic acid was used as the comonomer, the amount of structural units containing a structure derived from acrylic acid in the polymer was determined by neutralization titration using a 0.03 mol/L sodium hydroxide aqueous solution. More specifically, a solution to be titrated was prepared by dissolving 0.3 g of the polymer in 9.7 g of acetone at about 80°C and then adding 3 g of pure water. Phenolphthalein was used as an indicator, and the neutralization titration was performed using a 0.03 mol/L sodium hydroxide aqueous solution under room temperature.

Evaluation Example 4: measurement of slurry viscosity of electrode mixture

The electrode mixtures obtained in the examples and comparative examples were stored at 40°C under nitrogen atmosphere for a predetermined time (24 hours or 168 hours). The slurry viscosity was measured using an E-type viscometer at 25°C and a shear rate of 2 $s^{-1}$. The viscosity was measured by charging the slurry (electrode mixture) into the measurement device, waiting for 60 seconds, and then rotating the rotor. In addition, a value obtained after 300 seconds from the start of rotation of the rotor was used as the slurry viscosity. The slurry viscosity of the electrode mixture immediately after preparation was used as the initial slurry viscosity.

Materials used for preparing the electrode mixtures of the examples and comparative examples are shown in Table 1. In Table 1, "VDF/comonomer" indicates the ratio (weight ratio) of VDF/ratio (weight ratio) of the comonomer in the vinylidene fluoride polymer. For Example 12 and Comparative Example 6, the ratio (weight ratio) of VDF/ratio (weight ratio) of the comonomer HFP/ratio (weight ratio) of the comonomer APS in the vinylidene fluoride polymer is indicated. MMM represents monomethyl maleate. The isocyanate compound of Comparative Example 5 is 2-[0-(1'-methylpropylideneamino)carboxyamino]ethyl methacrylate. In addition, the amount of hydroxyimino groups is an amount of hydroxyimino groups contained in the oxime per gram of the vinylidene fluoride polymer (mmol/g vinylidene fluoride polymer) in the binder.

Table 1-1

| | Electrode Active material | Comonomer | VDF/comonomer |
|---|---|---|---|
| Example 1 | NCA811 | APS | 99/1 |
| Example 2 | NCA811 | APS | 99/1 |
| Example 3 | NCA811 | APS | 99/1 |
| Example 4 | NCA811 | APS | 99/1 |
| Example 5 | NCA811 | APS | 99/1 |
| Example 6 | NCA811 | APS | 99/1 |
| Example 7 | NCA811 | APS | 99/1 |
| Example 8 | NCA811 | APS | 99/1 |
| Example 9 | NCA811 | APS | 99/1 |
| Example 10 | NCA811 | APS | 99/1 |
| Example 11 | NCA811 | - | - |
| Example 12 | NCA811 | HFP/APS | 90/10/1 |
| Example 13 | NCA811 | MMM | 99/1 |
| Example 14 | NCA811 | AA | 99/0.5 |
| Example 15 | NCA811 | - | - |
| Comparative Example 1 | NCA811 | APS | 99/1 |
| Comparative Example 2 | NCA811 | - | - |
| Comparative Example 3 | NCA811 | APS | 99/1 |
| Comparative Example 4 | NCA811 | APS | 99/1 |
| Comparative Example 5 | NCA811 | APS | 99/1 |
| Comparative Example 6 | NCA811 | HFP/APS | 90/10/1 |
| Comparative Example 7 | NCA811 | MMM | 99/1 |
| Comparative Example 8 | NCA811 | AA | 99/0.5 |

Table 1-2

| | Oxime or additive | |
|---|---|---|
| | Type | Amount of hydroxyimino groups |
| Example 1 | Acetoxime | 0.34 |
| Example 2 | Acetoxime | 0.17 |
| Example 3 | Acetoxime | 0.84 |
| Example 4 | Acetoxime | 0.09 |
| Example 5 | 2-Butanone oxime | 0.34 |
| Example 6 | Cyclohexanone oxime | 0.34 |
| Example 7 | Acetaldehyde oxime | 0.34 |
| Example 8 | Benzaldehyde oxime | 0.34 |
| Example 9 | 2,3-Butanedione monoxime | 0.34 |
| Example 10 | Dimethylglyoxime | 0.67 |

(continued)

| | Oxime or additive | |
|---|---|---|
| | Type | Amount of hydroxyimino groups |
| Example 11 | Acetoxime | 0.34 |
| Example 12 | Acetoxime | 0.84 |
| Example 13 | Acetoxime | 0.34 |
| Example 14 | Acetoxime | 0.34 |
| Example 15 | Poly(methyl vinyl oxime) | 0.34 |
| Comparative Example 1 | - | - |
| Comparative Example 2 | - | - |
| Comparative Example 3 | Hydroquinone | - |
| Comparative Example 4 | 3,5-Dimethylpyrazole | - |
| Comparative Example 5 | Isocyanate compound | - |
| Comparative Example 6 | - | - |
| Comparative Example 7 | - | - |
| Comparative Example 8 | - | - |

The evaluation results of the electrode mixtures of the examples and comparative examples are shown in Table 2. The electrode mixtures of Examples 12 to 14 and Comparative Examples 1 to 8 were not measured for the slurry viscosity after 168 hours of storage.

[Table 2]

| | Amount of modification | η | Initial slurry viscosity | Slurry viscosity after 24 h of storage | Slurry viscosity after 168 h of storage |
|---|---|---|---|---|---|
| | mol% | dL/g | Pa-s | Pa-s | Pa-s |
| Example 1 | 0.36 | 2.5 | 23.0 | 4.4 | 2.6 |
| Example 2 | 0.36 | 2.5 | 18.6 | 4.8 | 18.6 |
| Example 3 | 0.36 | 2.5 | 26.4 | 7.3 | 1.2 |
| Example 4 | 0.36 | 2.5 | 19.3 | 8.3 | >200.0 |
| Example 5 | 0.36 | 2.5 | 19.3 | 5.4 | 2.6 |
| Example 6 | 0.36 | 2.5 | 18.9 | 4.0 | 16.0 |
| Example 7 | 0.36 | 2.5 | 20.1 | 3.6 | 22.0 |
| Example 8 | 0.36 | 2.5 | 18.1 | 3.6 | >200.0 |
| Example 9 | 0.36 | 2.5 | 19.3 | 4.0 | >200.0 |
| Example 10 | 0.36 | 2.5 | 13.1 | 5.5 | 0.2 |
| Example 11 | - | 3.1 | 35.6 | 4.4 | 0.2 |
| Example 12 | 0.44 | 2.3 | 12.0 | 11.1 | - |
| Example 13 | 0.45 | 2.1 | 10.5 | 6.0 | - |
| Example 14 | 0.43 | 2.5 | 37.3 | 8.1 | - |
| Example 15 | - | 3.1 | 41.9 | 27.7 | 54.2 |

(continued)

| | Amount of modification | η | Initial slurry viscosity | Slurry viscosity after 24 h of storage | Slurry viscosity after 168 h of storage |
|---|---|---|---|---|---|
| | mol% | dL/g | Pa-s | Pa-s | Pa-s |
| Comparative Example 1 | 0.36 | 2.5 | 17.7 | >200.0 | - |
| Comparative Example 2 | - | 3.1 | 39.3 | >200.0 | - |
| Comparative Example 3 | 0.36 | 2.5 | 32.2 | 198.2 | - |
| Comparative Example 4 | 0.36 | 2.5 | 18.5 | >200.0 | - |
| Comparative Example 5 | 0.36 | 2.5 | 21.6 | >200.0 | - |
| Comparative Example 6 | 0.44 | 2.3 | 10.9 | >200.0 | - |
| Comparative Example 7 | 0.45 | 2.1 | 10.1 | >200.0 | - |
| Comparative Example 8 | 0.43 | 2.5 | 35.0 | 197.0 | - |

As can be seen from Tables 1 and 2, for the electrode mixtures of Examples 1 to 15 using a binder containing an oxime, the slurry viscosity after 24 hours of storage was lower than the initial slurry viscosity. On the other hand, for the electrode mixtures of Comparative Examples 1 to 8 using a binder not containing an oxime, the slurry viscosity after 24 hours of storage was higher than the initial slurry viscosity. This revealed that the electrode mixtures of Examples 1 to 15 had high gelation resistance. In particular, for the electrode mixtures of Examples 1, 3, 5, 6, 10, and 11, the slurry viscosity after 168 hours of storage was lower than the initial slurry viscosity, revealing that these electrode mixtures had excellent gelation resistance.

**[INDUSTRIAL APPLICABILITY]**

The present invention can be utilized for a lithium-ion secondary battery.

**Claims**

**1.** A binder containing:

a vinylidene fluoride polymer containing 50 mol% or greater of vinylidene fluoride units; and
an oxime.

**2.** The binder according to claim 1, wherein the oxime is at least one oxime selected from compounds represented by Formula (1), compounds represented by Formula (2), and polymers or oligomers having a hydroxyimino group:

[Chem. 1]

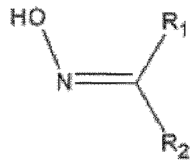

· · · (1)

[Chem. 2]

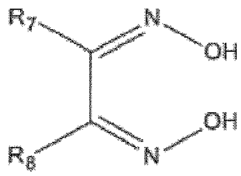

· · · (2)

where in Formula (1), $R_1$ and $R_2$ are each independently selected from a hydrogen atom, aldehyde groups, alkyl groups having from 1 to 10 carbons, alkenyl groups having from 2 to 10 carbons, alkynyl groups having from 2 to 10 carbons, cycloalkyl groups having from 3 to 10 carbons, cycloalkenyl groups having from 3 to 10 carbons, aryl groups having from 6 to 18 carbons, aralkyl groups having from 7 to 14 carbons, or heterocyclic groups having from 3 to 13 carbons, and one, some, or all hydrogen atom(s) of these groups may be substituted by a substituent(s) selected from alkyl groups having from 1 to 10 carbons, aryl groups, a hydroxyl group, and an amino group, and

$R_1$ and $R_2$ may be bonded to each other and form a ring together with a carbon atom to which $R_1$ and $R_2$ are bonded; and

in Formula (2), $R_7$ and $R_8$ are each independently selected from a hydrogen atom, aldehyde groups, alkyl groups having from 1 to 10 carbons, alkenyl groups having from 2 to 10 carbons, alkynyl groups having from 2 to 10 carbons, cycloalkyl groups having from 3 to 10 carbons, cycloalkenyl groups having from 3 to 10 carbons, aryl groups having from 6 to 18 carbons, aralkyl groups having from 7 to 14 carbons, or heterocyclic groups having from 3 to 13 carbons, and one, some, or all hydrogen atom(s) of these groups may be substituted by a substituent(s) selected from alkyl groups having from 1 to 10 carbons, aryl groups, a hydroxyl group, and an amino group, and

$R_7$ and $R_8$ may be bonded to each other and form a ring together with a carbon atom to which $R_7$ is bonded and a carbon atom to which $R_8$ is bonded.

**3.** The binder according to claim 2, wherein

in Formula (1), $R_1$ and $R_2$ are each independently selected from a hydrogen atom, aryl groups having from 6 to 18 carbons, aldehyde groups, or alkyl groups having from 1 to 10 carbons, and one, some, or all hydrogen atom(s) of these groups may be substituted by a substituent(s) selected from alkyl groups having from 1 to 10 carbons, aryl groups, a hydroxyl group, and an amino group, and

when $R_1$ and $R_2$ are alkyl groups, $R_1$ and $R_2$ may be bonded to each other and form a ring together with a carbon atom to which $R_1$ and $R_2$ are bonded; and

in Formula (2), $R_7$ and $R_8$ are each independently selected from a hydrogen atom, aryl groups having from 6 to 18 carbons, aldehyde groups, or alkyl groups having from 1 to 10 carbons, and one, some, or all hydrogen atom(s) of these groups may be substituted by a substituent(s) selected from alkyl groups having from 1 to 10 carbons, aryl groups, a hydroxyl group, and an amino group, and

when $R_7$ and $R_8$ are alkyl groups, $R_7$ and $R_8$ may be bonded to each other and form a ring together with a carbon atom to which $R_7$ is bonded and a carbon atom to which $R_8$ is bonded.

**4.** The binder according to claim 2, wherein

in Formula (1), $R_1$ and $R_2$ are each independently selected from alkyl groups having from 1 to 10 carbons, and

when $R_1$ and $R_2$ are alkyl groups, $R_1$ and $R_2$ may be bonded to each other and form a ring together with a carbon atom to which $R_1$ and $R_2$ are bonded; and

in Formula (2), $R_7$ and $R_8$ are each independently selected from a hydrogen atom or alkyl groups having from 1 to 10 carbons, and

when $R_7$ and $R_8$ are alkyl groups, $R_7$ and $R_8$ may be bonded to each other and form a ring together with a carbon atom to which $R_7$ is bonded and a carbon atom to which $R_8$ is bonded.

**5.** The binder according to any one of claims 1 to 4, wherein the vinylidene fluoride polymer is a vinylidene fluoride polymer containing a structural unit derived from a compound represented by Formula (3):

[Chem. 3]

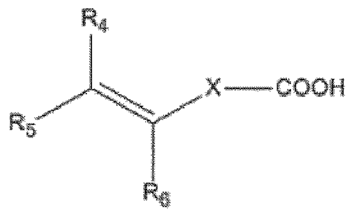

・・・(3)

where in Formula (3),

$R_4$ is a hydrogen atom, an alkyl group having from 1 to 5 carbons, or a carboxyl group substituted with an alkyl group having from 1 to 5 carbons,

$R_5$ and $R_6$ are each independently a hydrogen atom or an alkyl group having from 1 to 5 carbons, and

X is a single bond or an atomic group having a molecular weight of 500 or less and including a main chain having from 1 to 20 atoms.

**6.** The binder according to any one of claims 1 to 5, wherein a content of hydroxyimino groups contained in the oxime is from 0.005 to 5 mmol per gram of the vinylidene fluoride polymer.

**7.** An electrode mixture comprising the binder described in any one of claims 1 to 6 and an active material.

**8.** The electrode mixture according to claim 7, wherein the active material is a lithium metal oxide represented by Formula (4), and after extraction of the lithium metal oxide with water, pH of the water is 10.5 or higher:

$LiNi_xCo_yM_zO_2$ ... (4)

where in Formula (4), M is Mn or Al, and $0 < x \leq 1$, $0 < y \leq 1$, and $0 < z \leq 1$.

**9.** An electrode comprising an electrode mixture layer formed from the electrode mixture described in claim 7 or 8 on a current collector.

**10.** A non-aqueous electrolyte secondary battery comprising the electrode described in claim 9.

## INTERNATIONAL SEARCH REPORT

International application No. PCT/JP2021/024890

A. CLASSIFICATION OF SUBJECT MATTER
Int. Cl. C08K5/33(2006.01)i, C08L27/16(2006.01)i, H01M4/131(2010.01)i, H01M4/1391(2010.01)i, H01M4/505(2010.01)i, H01M4/525(2010.01)i, H01M4/62(2006.01)i, C08K3/22(2006.01)i
FI: H01M4/62 Z, H01M4/131, H01M4/525, H01M4/505, H01M4/1391, C08L27/16, C08K5/33, C08K3/22

According to International Patent Classification (IPC) or to both national classification and IPC

B. FIELDS SEARCHED

Minimum documentation searched (classification system followed by classification symbols)
Int. Cl. C08K5/33, C08L27/16, H01M4/131, H01M4/1391, H01M4/505, H01M4/525, H01M4/62, C08K3/22

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>A | WO 2012/115252 A1 (NIPPON ZEON CO., LTD.) 30 August 2012 (2012-08-30), claims, paragraphs [0051]-[0064], [0094]-[0098] | 1, 5-6<br>2-4, 7-10 |
| A | JP 2002-203549 A (SHIN-KOBE ELECTRIC MACHINERY CO., LTD.) 19 July 2002 (2002-07-19), entire text | 1-10 |
| A | JP 2000-256616 A (HITACHI, LTD.) 19 September 2000 (2000-09-19), entire text | 1-10 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03.09.2021 | 21.09.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/024890

| Patent Documents referred to in the Report | Publication Date | Patent Family | Publication Date |
|---|---|---|---|
| WO 2012/115252 A1 | 30.08.2012 | US 2013/0330590 A1<br>paragraphs [0058]-[0071], [0103]-[0107], claims<br>EP 2680343 A1<br>CN 103403919 A<br>KR 10-2014-0004156 A | |
| JP 2002-203549 A | 19.07.2002 | (Family: none) | |
| JP 2000-256616 A | 19.09.2000 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019160675 A
- JP 2017228412 A